# EUROPEAN PATENT APPLICATION

(11) **EP 4 429 306 A1**
(43) Date of publication of application: **11.09.2024**
(21) Application number: 21962977.1
(22) Date of filing: 05.11.2021
(51) Int. Cl.: H04W 24/02

(54) **METHOD AND APPARATUS FOR A PLURALITY OF NETWORK SLICE ADMISSION CONTROL FUNCTIONS (NSACFS) TO REPORT SLICE STATE INFORMATION**

(71) Applicant: Beijing Xiaomi Mobile Software Co., Ltd., Beijing 100085 (CN)
(72) Inventor: SHEN, Yang, Beijing 100085 (CN)
(74) Representative: Stöckeler, Ferdinand
(86) International application number: PCT/CN2021/129111
(87) International publication number: WO 2023/077464

(57) **Abstract**

Disclosed in the embodiments of the present application are a method and apparatus for a plurality of network slice admission control functions (NSACFs) to report slice state information, which method and apparatus can be applied to communication systems such as a 5th generation (5G) mobile communication system, a 5G new radio (NR) system, or other future new mobile communication systems. The method comprises: subscribing, from a plurality of NSACFs which correspond to network slices, to slice state information of the network slices by means of a network exposure function (NEF) (201); and acquiring, by means of the NEF, the slice state information of the network slices which is reported by the plurality of NSACFs (202). By implementing the embodiments of the present application, slice state information of network slices can be subscribed to from a plurality of NSACFs by means of an NEF, which NSACFs correspond to the network slices, and the slice state information of the network slices which is reported by the plurality of NSACFs is acquired and is fed back to an AF or an ASP, thereby preventing network slice state information from being incorrectly uploaded, and facilitating the improvement of the use experience of a user.

## Description

### TECHNICAL FIELD

The disclosure relates to the field of communication technology, more particularly, to a method and an apparatus for reporting slice state information of multiple network slice admission control functions (NSACFs).

### BACKGROUND

In wireless communication, a network slice can provide a complete set of network functions, such as a wireless access network function, a core network function, and an IP (Internet Protocol) Multimedia Subsystem (IMS) function. A network can support one or more network slices. The network slices can provide different promised services and are dedicated to users. The same service or slice but with different slice identifiers may have different Single Network Slice Selection Assistance Information (S-NSSAI).

A Network Slice Admission Control Function (NSACF) is used to monitor a number of registered user equipments (UEs) and a number of Packet Data Unit (PDU) sessions for a network slice that supports a Network Slice Admission Control (NSAC) function.

When multiple NSACFs are deployed in a network, how can the network accurately and in real-time obtain state information of these network slices, and transmit the obtained information effectively to an Application Function (AF) or an Application Service Provider (ASP) as needed, to ensure correct execution and process optimization of the function, as well as good service experience of the users, remains a problem to be solved in the fifth generation (5G) network. For example, the state information of a network slice may include a current number of registered users in the slice, a current number of activated Packet Data Unit (PDU) sessions, and a ratio of the current number of registered users in the slice and/or a current number of activated Packet Control Unit (PCU) sessions to an overall threshold of the slice, etc.

### SUMMARY

Embodiments of the disclosure provide a method and an apparatus for reporting slice state information of multiple network slice admission control functions (NSACFs), which can be performed in a fifth generation (5G) mobile communication system, a 5G new radio (NR) system, or other future new types of mobile communication systems. By subscribing to slice state information of a network slice from multiple NSACFs corresponding to the network slice through a Network Exposure Function (NEF), the slice state information of the network slice reported by the multiple NSACFs is obtained and fed back to an Application Function (AF) or an Application Service Provider (ASP), avoiding uploading errors of the state information of a network slice, thereby improving user experience.

According to a first aspect, embodiments of the disclosure provide a method for reporting slice state information of multiple NSACFs, performed by a first NSACF. The method includes:
subscribing to slice state information of a network slice from multiple NSACFs corresponding to the network slice through an NEF; and
obtaining, through the NEF, the slice state information of the network slice reported by the multiple NSACFs.

Optionally, the method further includes:
receiving a first network slice state subscription request sent by an AF or an ASP, in which the first network slice state subscription request includes the network slice.

Optionally, subscribing to the slice state information of the network slice from the multiple NSACFs corresponding to the network slice through the NEF includes:
sending a second network slice state subscription request to the NEF, in which the NEF sends the second network slice state subscription request to the multiple NSACFs corresponding to the network slice, in which the first NSACF belongs to the multiple NSACFs corresponding to the network slice.

Optionally, subscribing to the slice state information of the network slice from the multiple NSACFs corresponding to the network slice through the NEF includes:
sending a second network slice state subscription request to the NEF, in which the NEF sends the second network slice state subscription request to a second NSACF in the multiple NSACFs corresponding to the network slice, in which the first NSACF belongs to the multiple NSACFs corresponding to the network slice.

Optionally, the method further includes:
generating network slice state response information based on the slice state information of the network slice in the multiple NSACFs; and
sending the network slice state response information to the AF or ASP.

Optionally, the first slice state subscription request includes at least one of a subscription event, subscription event filtering information, and subscription event reporting mode information.

Optionally, the subscription event includes at least one of:
a number of terminals registered on the requested network slice;
a number of packet data unit (PDU) sessions established on the requested network slice;
a ratio of the number of terminals registered on the requested network slice to a maximum allowable number of registered terminals;
a ratio of the number of PDU sessions established on the requested network slice to a maximum allowable number of established PDU sessions;
the number of terminals registered on the requested network slice, and the ratio of the number of terminals registered on the requested network slice to the maximum allowable number of registered terminals; or
the number of PDU sessions established on the requested network slice, and the ratio of the number of PDU sessions established on the requested network slice to the maximum allowable number of established PDU sessions.

Optionally, the subscription event filtering information includes at least one of:
single network slice selection assistance information (S-NSSAI) of the requested network slice;
a registration area (RA) of the requested network slice;
a combination of the S-NSSAI of the requested network slice and a data network name (DNN); or
an area of interest (IoA) of the requested network slice.

Optionally, the subscription event reporting mode information includes at least one of:
a threshold for triggering reporting; or
a periodic time interval for triggering the reporting.

Optionally, the first network slice state subscription request includes an immediate reporting identifier, in which the immediate reporting identifier is configured to instruct the first NSACF to immediately send the network slice state response information upon receiving the first network slice state subscription request.

Optionally, generating the network slice state response information based on the slice state information of the network slice in the multiple NSACFs including:
aggregating the state information of the network slice in the multiple NSACFs to generate the slice state response information.

Optionally, the method further includes:
determining the multiple NSACFs corresponding to the network slice through a network configuration in the NEF or an operator policy.

Optionally, the first NSACF is a primary NSACF or a proxy NSACF in the multiple NSACFs corresponding to the network slice.

Optionally, the second network slice state subscription request includes at least one of a subscription event, subscription event filtering information, and subscription event reporting mode information.

Optionally, the method further includes:
filtering the network slice state response information based on the subscription event filtering information.

Optionally, the method further includes:
determining whether a reporting condition is met based on the subscription event reporting mode information; and
when the reporting condition is met, reporting the network slice state response information.

Optionally, receiving the first slice state subscription request sent by the AF or ASP includes:
when the AF or ASP is an untrusted AF or ASP, receiving the first slice state subscription request sent by the AF or ASP through the NEF.

Optionally, the first NSACF is selected by the NEF.

Optionally, the first NSACF is selected by the NEF through a network repository function (NRF), or the first NSACF is selected by the NEF through a local configuration.

According to a second aspect, embodiments of the disclosure provide a method for reporting slice state information of multiple NSACFs, performed by a NEF. The method includes:
receiving a first network slice state subscription request sent by a first NSACF, in which the first network slice state subscription request includes a network slice;
subscribing to slice state information of the network slice from multiple NSACFs corresponding to the network slice;
obtaining the slice state information of the network slice reported by the multiple NSACFs; and
sending the slice state information to the first NSACF.

Optionally, subscribing to the slice state information of the network slice from the multiple NSACFs corresponding to the network slice includes:
receiving a second network slice state subscription request sent by the first NSACF; and
sending the second network slice state subscription request to the multiple NSACFs corresponding to the network slice, in which the first NSACF belongs to the multiple NSACFs corresponding to the network slice.

Optionally, subscribing to the slice state information of the network slice from the multiple NSACFs corresponding to the network slice includes:
receiving a second network slice state subscription request sent by the first NSACF; and
sending the second network slice state subscription request to a second NSACF in the multiple NSACFs corresponding to the network slice, in which the first NSACF belongs to the multiple NSACFs corresponding to the network slice.

Optionally, the method further includes:
generating network slice state response information based on the slice state information of the network slice in the multiple NSACFs; and
sending the network slice state response information to an application function (AF) or an application service provider (ASP).

Optionally, the first slice state subscription request includes at least one of a subscription event, subscription event filtering information, and subscription event reporting mode information.

Optionally, the subscription event includes at least one of:
a number of terminals registered on the requested network slice;
a number of packet data unit (PDU) sessions established on the requested network slice;
a ratio of the number of terminals registered on the requested network slice to a maximum allowable number of registered terminals;
a ratio of the number of PDU sessions established on the requested network slice to a maximum allowable number of established PDU sessions;
the number of terminals registered on the requested network slice, and the ratio of the number of terminals registered on the requested network slice to the maximum allowable number of registered terminals; or
the number of PDU sessions established on the requested network slice, and the ratio of the number of PDU sessions established on the requested network slice to the maximum allowable number of established PDU sessions.

Optionally, the subscription event filtering information includes at least one of:
single network slice selection assistance information (S-NSSAI) of the requested network slice;
a registration area (RA) of the requested network slice;
a combination of the S-NSSAI of the requested network slice and a data network name (DNN); or
an area of interest (IoA) of the requested network slice.

Optionally, the subscription event reporting mode information includes at least one of:
a threshold for triggering reporting; or
a periodic time interval for triggering the reporting.

Optionally, generating the network slice state response information based on the slice state information of the network slice in the multiple NSACFs including:
aggregating the state information of the network slice in the multiple NSACFs to generate the slice state response information.

Optionally, the first network slice state subscription request includes an immediate reporting identifier, in which the immediate reporting identifier is configured to instruct the first NSACF to immediately send the network slice state response information upon receiving the first network slice state subscription request.

Optionally, the method further includes:
determining the multiple NSACFs corresponding to the network slice through a network configuration or an operator policy.

Optionally, the first NSACF is a primary NSACF or a proxy NSACF in the multiple NSACFs corresponding to the network slice.

Optionally, the second network slice state subscription request includes at least one of a subscription event, subscription event filtering information, and subscription event reporting mode information.

Optionally, receiving a slice state subscription request sent by the AF or ASP includes:
when the AF or ASP is an untrusted AF or ASP, receiving the slice state subscription request sent by the AF or ASP.

Optionally, the method further includes:
selecting the first NSACF.

Optionally, selecting the first NSACF includes:
selecting the first NSACF through a network repository function (NRF); or
selecting the first NSACF through a local configuration.

According to a third aspect, embodiments of the disclosure provide a method for reporting slice state information of multiple NSACFs, performed by an AF or an ASP. The method includes:
sending a first network slice state subscription request to a first NSACF, in which the first network slice state subscription request includes a network slice; and
receiving network slice state response information sent by the first NSACF.

Optionally, the first slice state subscription request includes at least one of a subscription event, subscription event filtering information, and subscription event reporting mode information.

Optionally, the subscription event includes at least one of:
a number of terminals registered on the requested network slice;
a number of packet data unit (PDU) sessions established on the requested network slice;
a ratio of the number of terminals registered on the requested network slice to a maximum allowable number of registered terminals;
a ratio of the number of PDU sessions established on the requested network slice to a maximum allowable number of established PDU sessions;
the number of terminals registered on the requested network slice, and the ratio of the number of terminals registered on the requested network slice to the maximum allowable number of registered terminals; or
the number of PDU sessions established on the requested network slice, and the ratio of the number of PDU sessions established on the requested network slice to the maximum allowable number of established PDU sessions.

Optionally, the subscription event filtering information includes at least one of:
single network slice selection assistance information (S-NSSAI) of the requested network slice;
a registration area (RA) of the requested network slice;
a combination of the S-NSSAI of the requested network slice and a data network name (DNN); or
an area of interest (IoA) of the requested network slice.

Optionally, the subscription event reporting mode information includes at least one of:
a threshold for triggering reporting; or
a periodic time interval for triggering the reporting.

Optionally, the first network slice state subscription request includes an immediate reporting identifier, in which the immediate reporting identifier is configured to instruct the first NSACF to immediately send the network slice state response information upon receiving the first network slice state subscription request.

Optionally, multiple NSACFs corresponding to the network slice is determined through a network configuration in a network exposure function (NEF) or an operator policy.

Optionally, the first NSACF is a primary NSACF or a proxy NSACF in multiple NSACFs corresponding to the network slice.

Optionally, the first NSACF is selected by the NEF through a network repository function (NRF), or the first NSACF is selected by the NEF through a local configuration.

According to a fourth aspect, embodiments of the disclosure provide a communication device. The communication device has an ability to implement part or all of the functions of the terminal in the method described in the first aspect. For example, the functions of the communication device may include functions in some or all of the embodiments of the disclosure, or may include a function of independently implementing any embodiment of the disclosure. The functions can be implemented by hardware, or can be implemented by executing corresponding software using the hardware. The hardware or software includes one or more units or modules corresponding to the above functions.

In an implementation, a structure of the communication device includes a transceiver module and a processing module. The processing module is configured to support the communication device to perform corresponding functions in the above methods. The transceiver module is used to support communication between the communication device and other devices. The communication device may further include a storage module coupled to the transceiver module and the processing module, and is configured to store necessary computer programs and data for the communication device.

As an example, the processing module may be a processor. The transceiver module may be a transceiver or a communication interface. The storage module may be a memory. In an implementation, the communication device includes:
a subscribing module, configured to subscribe to slice state information of a network slice from multiple NSACFs corresponding to the network slice through a network exposure function (NEF); and
an obtaining module, configured to obtain, through the NEF, the slice state information of the network slice reported by the multiple NSACFs.

According to a fifth aspect, embodiments of the disclosure provide a communication device. The communication device has an ability to implement part or all of the functions of the network device in the method described in the second aspect. For example, the functions of the communication device may include functions in some or all of the embodiments of the disclosure, or may include a function of independently implementing any embodiment of the disclosure. The functions can be implemented by hardware, or can be implemented by executing corresponding software using the hardware. The hardware or software includes one or more units or modules corresponding to the above functions.

In an implementation, a structure of the communication device includes a transceiver module and a processing module. The processing module is configured to support the communication device to perform corresponding functions in the above methods. The transceiver module is used to support communication between the communication device and other devices. The communication device may further include a storage module coupled to the transceiver module and the processing module, and is configured to store necessary computer programs and data for the communication device.

As an example, the processing module may be a processor. The transceiver module may be a transceiver or a communication interface. The storage module may be a memory. In an implementation, the communication device includes:
a first receiving module, configured to receive a first network slice state subscription request sent by a first NSACF, in which the first network slice state subscription request includes a network slice;
a first sending module, configured to subscribe to slice state information of the network slice from multiple NSACFs corresponding to the network slice;
a second receiving module, configured to obtain the slice state information of the network slice reported by the multiple NSACFs; and
a second sending module, configured to send the slice state information to the first NSACF.

According to a sixth aspect, embodiments of the disclosure provide a communication device. The communication device has an ability to implement part or all of the functions of the network device in the method described in the third aspect. For example, the functions of the communication device may include functions in some or all of the embodiments of the disclosure, or may include a function of independently implementing any embodiment of the disclosure. The functions can be implemented by hardware, or can be implemented by executing corresponding software using the hardware. The hardware or software includes one or more units or modules corresponding to the above functions.

In an implementation, a structure of the communication device includes a transceiver module and a processing module. The processing module is configured to support the communication device to perform corresponding functions in the above methods. The transceiver module is used to support communication between the communication device and other devices. The communication device may further include a storage module coupled to the transceiver module and the processing module, and is configured to store necessary computer programs and data for the communication device.

As an example, the processing module may be a processor. The transceiver module may be a transceiver or a communication interface. The storage module may be a memory. In an implementation, the communication device includes:
a third sending module, configured to send a first network slice state subscription request to a first NSACF, in which the first network slice state subscription request includes a network slice; and
a third receiving module, configured to receive network slice state response information sent by the first NSACF.

According to a seventh aspect, embodiments of the disclosure provide a communication device. The communication device includes a processor. When the processor calls a computer program stored in a memory, the method of the first aspect is implemented.

According to an eighth aspect, embodiments of the disclosure provide a communication device. The communication device includes a processor. When the processor calls a computer program stored in a memory, the method of the second aspect is implemented.

According to a ninth aspect, embodiments of the disclosure provide a communication device. The communication device includes a processor. When the processor calls a computer program stored in a memory, the method of the third aspect is implemented.

According to a tenth aspect, embodiments of the disclosure provide a communication device. The communication device includes a processor and a memory having a computer program stored thereon. When the computer program is executed by the processor, the communication device is caused to implement the method described in the first aspect above.

According to an eleventh aspect, embodiments of the disclosure provide a communication device. The communication device includes a processor and a memory having a computer program stored thereon. When the computer program is executed by the processor, the communication device is caused to implement the method described in the second aspect above.

According to a twelfth aspect, embodiments of the disclosure provide a communication device. The communication device includes a processor and a memory having a computer program stored thereon. When the computer program is executed by the processor, the communication device is caused to implement the method described in the third aspect above.

According to a thirteenth aspect, embodiments of the disclosure provide a communication device. The communication device includes a processor and an interface circuit. The interface circuit is configured to receive code instructions and transmit them to the processor. The processor is configured to run the code instructions to cause the device to perform the method described in the first aspect above.

According to a fourteenth aspect, embodiments of the disclosure provide a communication device. The communication device includes: a processor and an interface circuit. The interface circuit is configured to receive code instructions and transmit them to the processor. The processor is configured to run the code instructions to cause the device to perform the method described in the second aspect above.

According to a fifteenth aspect, embodiments of the disclosure provide a communication device. The communication device includes: a processor and an interface circuit. The interface circuit is configured to receive code instructions and transmit them to the processor. The processor is configured to run the code instructions to cause the device to perform the method described in the third aspect above.

According to a sixteenth aspect, embodiments of the disclosure provide a system for reporting slice state information of multiple NSACFs. The system includes the communication device of the fourth aspect, the communication device of the fifth aspect and the communication device of the sixth aspect; or the system includes the communication device of the seventh aspect, the communication device of the eighth aspect and the communication device of the ninth aspect; or the system includes the communication device of the tenth aspect, the communication device of the eleventh aspect, and the communication device of the twelfth aspect; or the system includes the communication device of the thirteenth aspect, the communication device of the fourteenth aspect, and the communication device of the fifteenth aspect.

According to a seventeenth aspect, embodiments of the disclosure provide a computer-readable storage medium for storing instructions used by the above terminal. When the instructions are executed, the terminal is caused to perform the method of the first aspect.

According to an eighteenth aspect, embodiments of the disclosure provide a readable storage medium for storing instructions used by the above network device. When the instructions are executed, the network device is caused to perform the method of the second aspect.

According to a nineteenth aspect, embodiments of the disclosure provide a readable storage medium for storing instructions used by the above network device. When the instructions are executed, the network device is caused to perform the method of the second aspect.

According to a twentieth aspect, embodiments of the disclosure provide a computer program product including a computer program. When the computer program is executed on a computer, the computer is caused to implement the method of the first aspect.

According to a twenty-first aspect, embodiments of the disclosure provide a computer program product including a computer program. When the computer program is executed on a computer, the computer is caused to implement the method of the second aspect.

According to a twenty-second aspect, embodiments of the disclosure provide a computer program product including a computer program. When the computer program is executed on a computer, the computer is caused to implement the method of the third aspect.

According to a twenty-third aspect, embodiments of the disclosure provide a chip system. The chip system includes at least one processor and an interface, to support a terminal in implementing the functions involved in the first aspect, such as determining or processing at least one of the data and information involved in the above method. In a possible design, the chip system further includes a memory for storing necessary computer programs and data for the terminal. The chip system can be composed of chips or include a chip and other discrete components.

According to a twenty-fourth aspect, embodiments of the disclosure provide a chip system. The chip system includes at least one processor and an interface, to support a network device in implementing the functions involved in the second aspect, such as determining or processing at least one of the data and information involved in the above method. In a possible design, the chip system further includes a memory for storing necessary computer programs and data for the network device. The chip system can be composed of chips or include a chip and other discrete components.

According to a twenty-fifth aspect, embodiments of the disclosure provide a chip system. The chip system includes at least one processor and an interface, to support a network device in implementing the functions involved in the third aspect, such as determining or processing at least one of the data and information involved in the above method. In a possible design, the chip system further includes a memory for storing necessary computer programs and data for the network device. The chip system can be composed of chips or include a chip and other discrete components.

According to a twenty-sixth aspect, embodiments of the disclosure provide a computer program. When the computer program is executed on a computer, the computer is caused to implement the method of the first aspect.

According to a twenty-seventh aspect, embodiments of the disclosure provide a computer program. When the computer program executed on a computer, the computer is caused to implement the method of the second aspect.

According to a twenty-eighth aspect, embodiments of the disclosure provide a computer program. When the computer program executed on a computer, the computer is caused to implement the method of the second aspect.

### BRIEF DESCRIPTION OF THE DRAWINGS

In order to clearly illustrate technical solutions of embodiments of the disclosure or background technologies, a description of drawings used in the embodiments or the background technologies is given below.
FIG. 1 is a structural diagram of a communication system provided by an embodiment of the disclosure.
FIG. 2 is a flowchart of a method for reporting slice state information of multiple network slice admission control functions (NSACFs) provided by an embodiment of the disclosure.
FIG. 3 is a flowchart of a method for reporting slice state information of multiple NSACFs provided by an embodiment of the disclosure.
FIG. 4 is a flowchart of a method for reporting slice state information of multiple NSACFs provided by an embodiment of the disclosure.
FIG. 5 is a flowchart of a method for reporting slice state information of multiple NSACFs provided by an embodiment of the disclosure.
FIG. 6 is a flowchart of a method for reporting slice state information of multiple NSACFs provided by an embodiment of the disclosure.
FIG. 7 is a flowchart of a method for reporting slice state information of multiple NSACFs provided by an embodiment of the disclosure.
FIG. 8 is a flowchart of a method for reporting slice state information of multiple NSACFs provided by an embodiment of the disclosure.
FIG. 9 is a flowchart of a method for reporting slice state information of multiple NSACFs provided by an embodiment of the disclosure.
FIG. 10 is a schematic diagram of a system for reporting slice state information of multiple NSACFs provided by an embodiment of the disclosure.
FIG. 11 is a block diagram of a communication device provided by an embodiment of the disclosure.
FIG. 12 is a block diagram of a communication device provided by another embodiment of the disclosure.
FIG. 13 is a block diagram of a chip provided by an embodiment of the disclosure.

### DETAILED DESCRIPTION

For ease of understanding, terms involved in this disclosure are first introduced.

### 1. Network Slice Admission Control Function (NSACF)

The NSACF is used to monitor a number of registered user equipments (UEs) and a number of Packet Data Unit (PDU) sessions for a network slice that supports a Network Slice Admission Control (NSAC) function. The NSACF is also configured with access type information (i.e. a 3GPP access type, a non 3GPP access type, or supporting both the access types) of Single Network Slice Selection Assistance Information (S-NSSAI) that performs the NSAC function.

Each NSACF is configured with a maximum number of UEs allowed for accessing a network slice and a maximum number of PDU sessions allowed for activation. The NSACF supports monitoring and admission control of a maximum number of terminals and a maximum number of PDU sessions within a Public Land Mobile Network (PLMN). If the number of UEs registered to a current slice exceeds a certain threshold (such as a maximum number of UEs for the slice), the NSAC may reject UE registration to control the number of served UEs not exceed the maximum number of UEs for the slice configured by the network. When the number of PDU sessions activated within the slice exceeds a certain threshold (such as the maximum number of activated sessions), the NSAC may reject the activation of PDU sessions to control the current number of sessions not exceed the maximum number of sessions configured by the network.

### 2. Application Function (AF) and Application Service Provider (ASP)

The AF or the ASP, based on demands for assurance or improvement of user experience needs, has a need to obtain state information of a network slice, including information such as a current number of registered users in a slice, a current number of activated PDU sessions, a ratio of the current number of registered users of the slice and/or the current number of activated PDU sessions to an overall threshold of the slice, etc.

### 3. Network Exposure Function (NEF)

The NEF is located between a fifth generation (5G) core network and an external third-party application function entity (there may also be some internal AFs), responsible for managing exposure network data to the outside world. All external applications that want to access internal data of the 5G core network must access the internal data through the NEF. The NEF provides corresponding security guarantees to ensure security from an external application to a 3gpp network, providing functions such as exposure of a Quality of Service (QoS) customization capability for the external applications, mobile state event subscription, and AF request distribution, etc.

### 4. Network Repository Function (NRF)

The NRF is used for network function (NF) registration, management, and state detection, achieving automated management of all NFs. When each NF is started, it is necessary for the NF to register at the NRF before providing services. Registration information includes an NF type, an address, a service list, etc.

In order to better understand a method for reporting slice state information of multiple NSACFs disclosed in embodiments of the disclosure, a communication system applicable for embodiments of the disclosure is firstly described below.

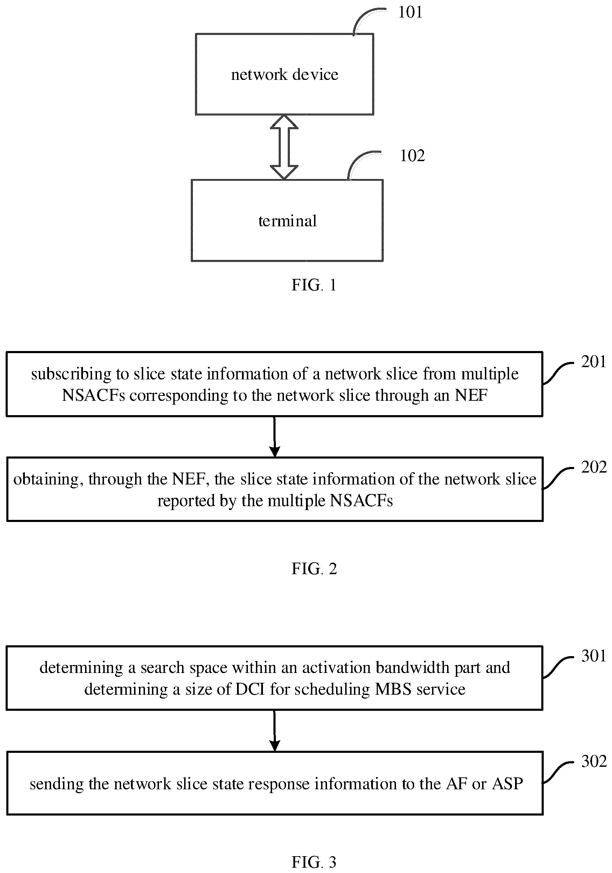

As illustrated in FIG. 1, FIG. 1 is a structural diagram of a communication system provided by an embodiment of the disclosure. The communication system may include, but is not limited to, a network device and a terminal. The number and form of devices shown in FIG. 1 are only for examples and do not constitute a limitation on the embodiments of the disclosure, and two or more network devices and two or more terminals may be included in practical applications. The communication system shown in FIG. 1 may include, for example, a network device 101 and a terminal 102.

It is noted that a technical solution of embodiments of the disclosure may be applied to various communication systems, such as, a fifth generation (5G) mobile communication system, a 5G new radio (NR) system, or other future new mobile communication systems. It should also be noted that a side link in embodiments of the disclosure can also be referred to as a sidelink or a direct link.

The network device 101 in embodiments of the disclosure may be an entity on a network side for transmitting or receiving signals. For example, the network device 101 may be an evolved NodeB (eNB), a transmission reception point (TRP), a next generation NodeB (gNB) in an NR system, a base station in other future mobile communication systems or an access node in a wireless fidelity (Wi-Fi) system. The specific technology and specific device form used by the network device are not limited in the embodiments of the disclosure. The network device provided in embodiments of the disclosure may be composed of a central unit (CU) and distributed units (DUs). The CU can also be referred to as a control unit. Using the CU-DU structure, a protocol layer of the network device, such as a base station, can be separated, with some protocol layer functions placed in the CU for centralized control, and part of or all the remaining protocol layer functions distributed in the DUs, DUs are centrally controlled by the CU.

The terminal 102 in embodiments of the disclosure is an entity on a user side for receiving or transmitting signals, such as a cellular phone. The terminal may also be referred to as a terminal device, a user equipment (UE), a mobile station (MS), a mobile terminal (MT), and the like. The terminal may be a vehicle with a communication function, a smart car, a mobile phone, a wearable device, a Pad, a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The specific technology and specific device form adopted by the terminal are not limited in embodiments of the disclosure.

A network slice can provide complete network functions, such as a wireless access network function, a core network function, and an IP (Internet Protocol) Multimedia Subsystem (IMS) function. A network can support one or more network slices. The network slices can provide different promised services and are dedicated to users. The same service or slice with different slice identifiers may have different S-NSSAIs.

Multiple network slices deployed by a mobile network operator (MNO) can provide exactly a same function for different UE groups. This is because the network slices provide different promised services and/or the network slices are dedicated to customers. In this case, such network slices may have different S-NSSAIs of the same slice, or have different slice identifiers of the same service type.

Selection of a group of network slice instances of a UE is usually triggered by an access firstly contacted in a registration process and an Access and Mobility Management Function (AMF), through interaction with a Network Slice Selection Function (NSSF), and may result in a change to the AMF. For each Public Land Mobile Network (PLMN), a PDU session belongs to one and only one specific network slice instance. Different network slice instances may have PDU sessions for a specific slice using a same Data Network Name (DNN). However, different network slice instances do not share PDU sessions. During a switching process, a source AMF select a target AMF by interacting with the Network Repository Function (NRF).

A Network Slice Type (NEST) is applied to network slices. A network slice is typically supported by multiple network slice instances. A General Network Slice Template (GST) defines an attribute supported by a network slice.

An NSACF is used to monitor a number of registered UEs and a number of PDU sessions for a network slice that supports a NSAC function. The NSACF is also configured with access type information (i.e. a 3GPP access type, a non 3GPP access type, or supporting both the access types) of S-NSSAI that performs the NSAC function.

Each NSACF is configured with a maximum number of terminals (UEs) allowed for accessing a network slice and a maximum number of PDU sessions allowed for activation. The NSACF supports monitoring and admission control of the maximum number of terminals and the maximum number of PDU sessions within a PLMN. If the number of UEs registered to the current slice exceeds a certain threshold (such as a maximum number of UEs for the slice), the NSAC may reject UE registration to control that the number of served UEs does not exceed the maximum number of UEs for the slice configured by the network. When the number of PDU sessions activated within the slice exceeds a certain threshold (such as the maximum number of activated sessions), the NSAC may reject the activation of PDU sessions to control that the current number of sessions does not exceed the maximum number of sessions configured by the network.

Multiple NSACFs may be deployed in an operator network. An NSACF may serve one or more S-NSSAI slice services in one service area. Within one service area, one S-NSSAI is processed by only one NSACF, which can be an NSACF instance or an NSACF Set. A PLMN may have one or more service areas.

An AF or an ASP, based on demands for assurance or improvement of user experience, has a need to obtain state information of a network slice, including information such as a current number of registered users in a slice, a current number of activated PDU sessions, a ratio of the current number of registered users in the slice and/or the current number of activated PCU sessions to an overall threshold of the slice, etc.

However, when multiple NSACFs are deployed in a network, how can the network accurately and in real-time obtain the state information of these network slices, such as a current number of registered users in the slice, a current number of activated PDU sessions, and a ratio of the current number of registered users and/or a current number of activated Packet Control Unit (PCU) sessions in the slice to an overall threshold of the slice, and effectively transmit the obtained information to the AF or the ASP as needed to ensure correct execution and process optimization of the function, as well as good service experience of the users, remains a problem to be solved in the 5G network.

It is understood that the communication system described in the embodiments of the disclosure is intended to more clearly illustrate the technical solutions of the embodiments of the disclosure, and does not constitute a limitation on the technical solutions provided by the embodiments of the disclosure. It is understood by those skilled in the art that as the system architecture evolves and new service scenarios emerge, the technical solutions provided by the embodiments of the disclosure are also applicable to similar technical problems.

Following is a detailed introduction of a method and an apparatus for reporting slice state information of multiple NSACFs provided in this disclosure with reference to the accompany drawings.

As shown in FIG. 2, FIG. 2 is a flowchart of a method for reporting slice state information of multiple NSACFs according to an embodiment of the disclosure. As shown in FIG. 2, the method is performed by a first NSACF. The method includes, but is not limited to, the following steps.

Step 201, slice state information of a network slice is subscribed to from multiple NSACFs corresponding to the network slice through an NEF.

In embodiments of the disclosure, network slicing is an on-demand networking method that allows an operator to separate multiple virtual end-to-end networks on a unified infrastructure. Each network slice is logically isolated from a wireless access network carrier network to a core network to adapt to various types of applications. One network slice may be divided into at least three parts: a wireless network sub slice, a carrier network sub slice, and a core network sub slice. The NSACF is used to monitor a number of registered UEs and a number of PDU sessions of a network slice that supports a NSAC function. The NSACF is also configured with access type information for S-NSSAI, which performs the NSAC function.

An AF or an ASP may subscribe to or cancel, according to service demands, a reporting notification of network slice state information to a specific NSACF (i.e. the first NSACF) in the requested network slice. This is implemented by sending a first network slice state subscription request to the first NSACF. The requested network slice includes multiple NSACFs. After receiving the first network slice state subscription request, the first NSACF parses, based on the first network slice state subscription request, the multiple NSACFs in the network slice that may report slice state information, and subscribes to the slice state information of the network slice from the multiple NSACFs corresponding to the network slice through the NEF.

Step 202, the slice state information of the network slice reported by multiple NSACFs is obtained through the NEF.

In embodiments of the disclosure, the multiple NSACFs corresponding to the network slice report the slice state information requested by the first network slice state subscription request to the NEF, and the NEF reports the received slice state information to the first NSACF.

By implementing the embodiments of the disclosure, the slice state information of the network slice can be subscribed to from the multiple NSACFs corresponding to the network slice through the NEF, the slice state information of the network slice reported by the multiple NSACFs is obtained and fed back to the AF or ASP, avoiding uploading errors of the state information of the network slice, thereby improving the user experience.

Optionally, the method further includes:
receiving a first network slice state subscription request sent by an AF or an ASP, in which the first network slice state subscription request includes the network slice.

In embodiments of the disclosure, the AF or ASP may subscribe to or cancels, according to service demands, a reporting notification of network slice state information to a specific NSACF (i.e. the first NSACF) in the requested network slice. This is implemented by sending a first network slice state subscription request to the first NSACF. The requested network slice includes multiple NSACFs.

Optionally, subscribing to the slice state information of the network slice from the multiple NSACFs corresponding to the network slice through the NEF includes:
sending a second network slice state subscription request to the NEF, in which the NEF sends the second network slice state subscription request to the multiple NSACFs corresponding to the network slice, and the first NSACF belongs to the multiple NSACFs corresponding to the network slice.

In embodiments of the disclosure, after receiving the first network slice state subscription request sent by the AF or ASP, the first NSACF generates the second network slice state subscription request, and sends it to the NEF. Then, the second network slice state subscription request is sent to the multiple NSACFs corresponding to the network slice through the NEF, to obtain the slice state information of the multiple NSACFs corresponding to the network slice.

Optionally, subscribing to the slice state information of the network slice from the multiple NSACFs corresponding to the network slice through the NEF includes:
sending a second network slice state subscription request to the NEF, in which the NEF sends the subscription request to a second NSACF among the multiple NSACFs corresponding to the network slice, and the first NSACF belongs to the multiple NSACFs corresponding to the network slice.

In embodiments of the disclosure, after receiving the first network slice state subscription request sent by the AF or ASP, the first NSACF generates the second network slice state subscription request, and sends it to the NEF. Then, the second network slice state subscription request is sent to the second NSACF among the multiple NSACFs corresponding to the network slice through the NEF, to obtain the slice state information of the second NSACF among the multiple NSACFs corresponding to the network slice.

In a possible embodiment, the multiple NSACFs corresponding to the network slice includes one second NSACF.

In a possible embodiment, the multiple second NSACFs corresponding to the network slice includes multiple second NSACF.

As shown in FIG. 3, FIG. 3 is a flowchart of a method for reporting slice state information of multiple NSACFs according to an embodiment of the disclosure. As shown in FIG. 3, the method is performed by a first NSACF. The method includes, but is not limited to, the following steps.

Step 301, network slice state response information is generated based on the state information of the network slice in the multiple NSACFs.

In embodiments of the disclosure, after receiving a first network slice state subscription request sent by an AF or an ASP, the first NSACF parses a subscription event, subscription event filtering information, and subscription event reporting mode information in the first network slice state subscription request, and aggregates the state information of the requested network slice based on the first network slice state subscription request, to generate the state response information of the requested network slice.

Step 302, the network slice state response information is sent to the AF or ASP.

In embodiments of the disclosure, after generating the network slice state response information, the first NSACF sends the network slice state response information to the AF or ASP, and feeds back the state information required by the AF or ASP to the AF or ASP.

By implementing embodiments of the disclosure, the first slice state subscription request sent by the AF or ASP may be received, and corresponding state response information is fed back to the AF or ASP. In this way, uploading errors of the state information of the network slice can be prevented, which is beneficial for improving the user experience.

Optionally, the first slice state subscription request includes at least one of a subscription event, subscription event filtering information, and subscription event reporting mode information.

Optionally, the subscription event includes at least one of the following:
a number of terminals registered on the requested network slice;
a number of PDU sessions established on the requested network slice;
a ratio of the number of terminals registered on the requested network slice to a maximum allowable number of registered terminals;
a ratio of the number of PDU sessions established on the requested network slice to a maximum allowable number of established PDU sessions;
the number of terminals registered on the requested network slice and the ratio of the number of terminals on registered the requested network slice to the maximum allowable number of registered terminals; or
the number of PDU sessions established on the requested network slice and the ratio of the number of PDU sessions established on the requested network slice to the maximum allowable number of established PDU sessions.

Each NSACF is configured with a maximum number of terminals (UEs) allowed to access the network slice and a maximum number of PDU sessions allowed for activation. The NSACF supports monitoring and admission control of the maximum number of terminals and the maximum number of PDU sessions within a PLMN. If the number of UEs registered to the current slice exceeds a certain threshold (such as the maximum number of UEs for the slice), the NSAC may reject UE registration to control that the number of served UEs does not exceed the maximum number of UEs for the slice configured by the network. When the number of PDU sessions activated within the slice exceeds a certain threshold (such as the maximum number of activated sessions), the NSAC may reject the activation of PDU sessions to control that the current number of sessions does not exceed the maximum number of sessions configured by the network.

One NSACF may be deployed in an operator network. One NSACF may serve one or more S-NSSAI slice services in one service area. Within one service area, one S-NSSAI is processed by only one NSACF, which can be an NSACF instance or an NSACF Set. A PLMN may have one or more service areas.

The AF or ASP, based on demands for assurance or improvement of user experience, has a need to obtain state information of a network slice, including information such as a current number of registered users in the slice, a current number of activated PDU sessions, a ratio of the current number of registered users in the slice and/or the current number of activated PCU sessions to an overall threshold of the slice.

Optionally, the subscription event filtering information includes at least one of the following:
S-NSSAI of the requested network slice;
a registration area (RA) of the requested network slice;
a combination of the S-NSSAI of the requested network slice and a data network name (DNN); or
an area of interest (IoA) of the requested network slice.

In embodiments of the disclosure, the subscription event filtering information is used to define a scope that needs to be reported, such as a slice identifier (e.g., S-NSSAI), the registration area (RA), the combination of the slice identifier (e.g., S-NSSAI) and the data network name (DNN), the IoA, etc.

Optionally, the subscription event reporting mode information includes at least one of the following:
a threshold for triggering reporting; or
a periodic time interval for triggering the reporting.

In embodiments of the disclosure, the subscription event reporting mode information is used to define a reporting mode. If a reporting information parameter is the threshold for triggering reporting, the current threshold is reported when the threshold is reached. If a reporting information parameter is the periodic time interval for triggering the reporting, a current value may be reported when the periodic time interval is reached.

Optionally, the first network slice state subscription request further includes an immediate reporting identifier. The immediate reporting identifier is used to instruct the first NSACF to immediately send the network slice state response information upon receiving the network slice state subscription request.

Optionally, generating the network slice state response information based on the slice state information of the network slice in the multiple NSACFs includes:
aggregating the state information of the network slice in the multiple NSACFs to generate the slice state response information.

In embodiments of the disclosure, after receiving the first network slice state subscription request, the first NSACF parses the subscription event, the subscription event filtering information, and the subscription event reporting mode information in the first network slice state subscription request, and aggregates the state information of the requested network slice based on the first network slice state subscription request to generate the state response information of the requested network slice.

In a possible embodiment, after the first NSACF receives a second network slice state subscription request, the second network slice state subscription request is sent to multiple NSACFs corresponding to the network slice through an NEF. The multiple NSACFs parse a subscription event, subscription event filtering information, and subscription event reporting mode information in the second network slice state subscription request, and aggregates the state information of the network slice in the multiple NSACFs according to the second network slice state subscription request to generate the state response information of the requested network slice.

In a possible embodiment, after the first NSACF receives the second network slice state subscription request, the second network slice state subscription request is sent to a second NSACF in the multiple NSACFs corresponding to the network slice through the NEF. The second NSACF in the multiple NSACFs parses the subscription event, the subscription event filtering information, and the subscription event reporting mode information in the second network slice state subscription request, and aggregates the state information of the network slice of the second NSACF in the multiple NSACFs based on the second network slice state subscription request to generate the state response information of the requested network slice.

Optionally, the method further includes:
determining the multiple NSACFs corresponding to the network slice through a network configuration in the NEF or an operator policy.

Optionally, the first NSACF is a primary NSACF or a proxy NSACF in the multiple NSACFs corresponding to the network slice.

In embodiments of the disclosure, NSACF-P, i.e., the first NSACF, may be the primary NSACF in the requested slice or the proxy NSACF in the requested slice. When the first NSACF is the primary NSACF, other NSACFs in the slice are secondary NSACFs. When the first NSACF is the proxy NASCF, the first NSACF and other NSACFs in the slice do not have a master-slave relationship.

Optionally, the second network slice state subscription request includes at least one of a subscription event, subscription event filtering information, and subscription event reporting mode information.

Optionally, the method further includes:
filtering the network slice state response information based on the subscription event filtering information.

In embodiments of the disclosure, the subscription event filtering information is used to indicate a scope that needs to be reported, including one of the following: a slice identifier (e.g., S-NSSAI), a registration area (RA), a combination of the S-NSSAI and a data network name (DNN), or an area of interest (IoA). Based on the subscription event filtering information, network slice state response information required by the AF or ASP is filtered out from the network slice state response information.

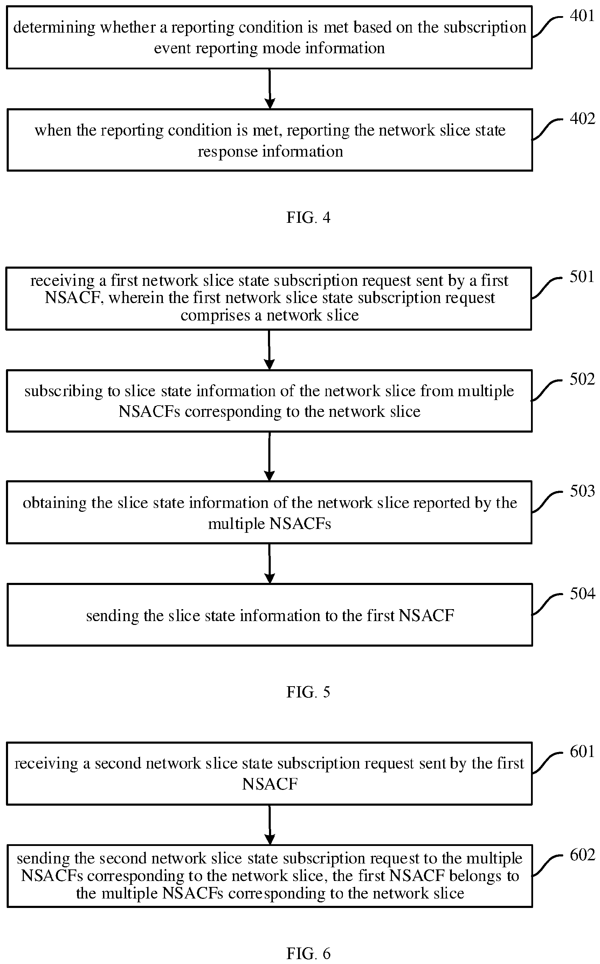

As shown in FIG. 4, FIG. 4 is a flowchart of a method for reporting slice state information of multiple NSACFs according to an embodiment of the disclosure. As shown in FIG. 4, the method is performed by a first NSACF. The method includes, but is not limited to, the following steps.

Step 401, it is determined whether a reporting condition is met based on the subscription event reporting mode information.

Step 402, if the reporting condition is met, the network slice state response information is reported.

In embodiments of the disclosure, the subscription event reporting mode information includes a threshold or a periodic reporting containing a periodic time interval. If a reporting information parameter is the threshold for triggering reporting, the current threshold may be reported when the threshold is reached. If the reporting information parameter is a periodic time interval for triggering reporting, the current value may be reported when the periodic time interval is reached.

Optionally, receiving a slice state subscription request sent by an AF or an ASP includes:
when the AF or ASP is an untrusted AF or ASP, the slice state subscription request sent by the AF or ASP is received through an NEF.

In embodiments of the disclosure, the first NSACF sends a response message of Nnsacf_ EventExposure_subscribe/usubsubscribe Response to the AF or ASP, i.e., the network slice state response information. After receiving a slice event subscription request from the AF/ASP, the first NSACF subscribes to reporting events of the requested slice from each NSACF of the requested slice. After receiving reporting information from each NSACF, it reports to the requesting AF/ASP.

When an operator policy does not expose slice identifiers to an untrusted AF/ASP, and the AF/ASFs are untrusted AF/ASP. The network slice state subscription request may be sent to NSACF through the NEF. The Nnsacf-EventExposure subscribe/unsubscribe Request message is replaced with an Nnef-EventExposure subscribe/unsubscribe Request message between the AF/ASP and the NEF, and an Nnsacf-EventExposure subscribe/unsubscribe Request message between the NEF and the NSACF.

Optionally, the first NSACF is selected by the NEF.

Optionally, the first NSACF is selected by the NEF through an NRF, or the first NSACF is selected by the NEF through a local configuration.

As shown in FIG. 5, FIG. 5 is a flowchart of a method for reporting slice state information of multiple NSACFs according to an embodiment of the disclosure. As shown in FIG. 5, the method is performed by an NEF. The method includes, but is not limited to, the following steps.

Step 501, a first network slice state subscription request sent by a first NSACF is received, the first network slice event slice state subscription request includes a network slice.

In embodiments of the disclosure, after receiving a first network slice state subscription request from an AF/ASP, the first NSACF sends the first network slice state subscription request to the NEF. The first network slice event slice state subscription request includes the network slice, and the first slice state subscription request includes at least one of a subscription event, subscription event filtering information, and subscription event reporting mode information.

Step 502, slice state information of the network slice is subscribed to from multiple NSACFs corresponding to the network slice.

In embodiments of the disclosure, the NEF obtains the network slice based on the first network slice state subscription request and subscribes to the slice state information of the network slice from the multiple NSACFs corresponding to the network slice.

Step 503, the slice state information of the network slice reported by the multiple NSACFs is obtained.

In embodiments of the disclosure, the multiple NSACFs receives a subscription from the NEF and reports the slice state information of the network slice to the NEF.

Step 504, the slice state information is sent to the first NSACF.

In embodiments of the disclosure, the NEF aggregates the slice state information, generates network slice state response information, and sends the network slice state response information to the first NSACF. The first NSACF sends the network slice state response information to the AF or ASP.

By implementing embodiments of the disclosure, the first slice time subscription request sent by the AF or ASP can be forwarded through the NEF, or the network slice state response information sent by the first NASCF can be forwarded through the NEF. In this way, it is possible to avoid uploading errors of the network slice state information, which is beneficial for improving the user experience.

As shown in FIG. 6, FIG. 6 is a flowchart of a method for reporting slice state information of multiple NSACFs according to an embodiment of the disclosure. As shown in FIG. 6, the method is performed by a NEF. The method includes, but is not limited to, the following steps.

Step 601, a second network slice state subscription request sent by the first NSACF is received.

Step 602, the second network slice state subscription request is sent to multiple NSACFs corresponding to the network slice, the first NSACF belongs to the multiple NSACFs corresponding to the network slice.

In embodiments of the disclosure, after receiving a first network slice state subscription request sent by an AF or an ASP, the first NSACF generates the second network slice state subscription request, and sends it to the NEF. Then, the second network slice state subscription request is sent to the multiple NSACFs corresponding to the network slice through the NEF, to obtain the slice state information of the multiple NSACFs corresponding to the network slice.

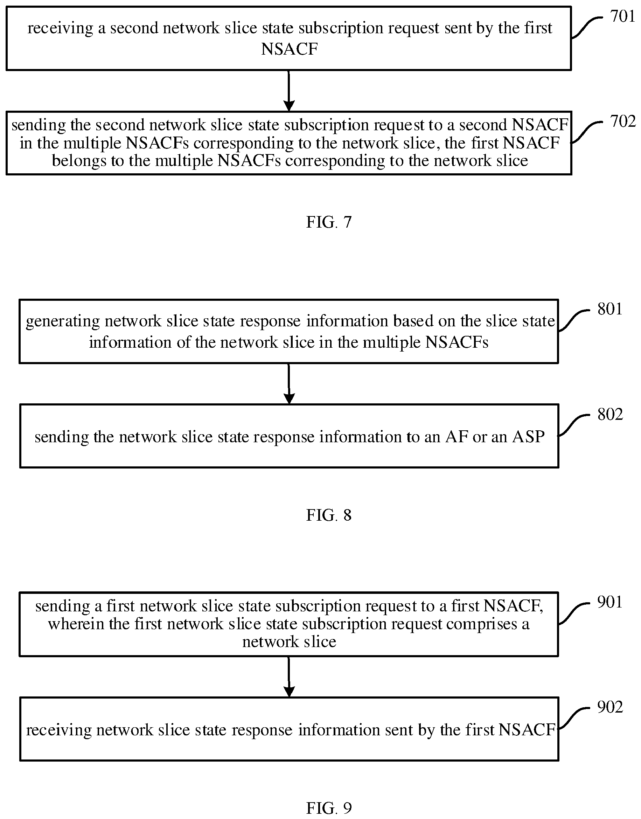

As shown in FIG. 7, FIG. 7 is a flowchart of a method for reporting slice state information of multiple NSACFs according to an embodiment of the disclosure. As shown in FIG. 7, the method is performed by a NEF. The method includes, but is not limited to, the following steps.

Step 701, a second network slice state subscription request sent by the first NSACF is received.

Step 702, the subscription request is sent to a second NSACF in the multiple NSACFs corresponding to the network slice, the first NSACF belongs to the multiple NSACFs corresponding to the network slice.

In embodiments of the disclosure, after receiving a first network slice state subscription request sent by an AF or an ASP, the first NSACF generates the second network slice state subscription request, and sends it to the NEF. Then, the second network slice state subscription request is sent to the second NSACF in the multiple NSACFs corresponding to the network slice through the NEF, to obtain the slice state information of the second NSACF among the multiple NSACFs corresponding to the network slice.

As shown in FIG. 8, FIG. 8 is a flowchart of a method for reporting slice state information of multiple NSACFs according to an embodiment of the disclosure. As shown in FIG. 8, the method is performed by a NEF. The method includes, but is not limited to, the following steps.

Step 801, network slice state response information is generated based on the slice state information of the network slice in the multiple NSACFs.

In embodiments of the disclosure, after receiving a first network slice state subscription request sent by the AF or ASP, the first NSACF parses a subscription event, subscription event filtering information, and subscription event reporting mode information in the first network slice state subscription request, and aggregates the slice state information of the requested network slice based on the first network slice state subscription request, to generate the state response information of the requested network slice.

Step 802, the network slice state response information is sent to the AF or ASP.

In embodiments of the disclosure, after generating the network slice state response information, the first NSACF sends the network slice state response information to the AF or ASP, so as to feed back the state information required by the AF or ASP to the AF or ASP.

By implementing embodiments of the disclosure, the first slice time subscription request sent by the AF or ASP is received, and corresponding state response information is generated and fed back to the AF or ASP. In this way, it is possible to avoid uploading errors of network slice state information, which is beneficial for improving the user experience.

Optionally, the first slice state subscription request includes at least one of a subscription event, subscription event filtering information, and subscription event reporting mode information.

Optionally, the subscription event includes at least one of the following:
a number of terminals registered on the requested network slice;
a number of PDU sessions established on the requested network slice;
a ratio of the number of terminals registered on the requested network slice to a maximum allowable number of registered terminals;
a ratio of the number of PDU sessions established on the requested network slice to a maximum allowable number of established PDU sessions;
the number of terminals registered on the requested network slice and a ratio of the number of terminals registered on the requested network slice to the maximum allowable number of registered terminals;
the number of PDU sessions established on the requested network slice and a ratio of the number of PDU sessions established on the requested network slice to the maximum allowable number of established PDU sessions.

Each NSACF is configured with a maximum number of terminal (UEs) allowed to accessing a network slice and a maximum number of PDU sessions allowed for activation. The NSACF supports monitoring and admission control of the maximum number of terminals and the maximum number of PDU sessions within a PLMN. If the number of UEs registered to the current slice exceeds a certain threshold (such as the maximum number of UEs in the slice), the NSAC may reject UE registration to control that the number of served UEs does not exceed the maximum number of UEs for the slice configured by the network. When the number of PDU sessions activated within the slice exceeds a certain threshold (such as the maximum number of activated sessions), the NSAC may reject the activation of PDU sessions to control that the current number of sessions does not exceed the maximum number of sessions configured by the network.

One NSACF may be deployed in an operator network. One NSACF may serve one or more S-NSSAI slice services in one service area. Within one service area, one S-NSSAI is processed by only one NSACF, which can be an NSACF instance or an NSACF Set. A PLMN can have one or more service areas.

The AF or ASP, based on demands for assurance or improvement of user experience, has a need to obtain state information of a network slice, including information such as a current number of registered users in the slice, a current number of activated PDU sessions, a ratio of the current number of registered users in the slice and/or the current number of activated PCU sessions to an overall threshold of the slice.

Optionally, the subscription event filtering information includes at least one of the following:
S-NSSAI of the requested network slice;
a registration area (RA) of the requested network slice;
a combination of the S-NSSAI of the requested network slice and a data network name (DNN); or
an area of interest (IoA) of the requested network slice.

In embodiments of the disclosure, the subscription event filtering information is used to define a scope that needs to be reported, such as a slice identifier (e.g., S-NSSAI), the registration area (RA), the combination of the slice identifier (e.g., S-NSSAI) and the data network name (DNN), the IoA, etc.

Optionally, the subscription event reporting mode information includes at least one of the following:
a threshold for triggering reporting; or
a periodic time interval for triggering the reporting.

In embodiments of the disclosure, the subscription event reporting mode information is used to define a reporting mode. If a reporting information parameter is the threshold for triggering reporting, the current threshold is reported when the threshold is reached. If a reporting information parameter is the periodic time interval for triggering the reporting, a current value may be reported when the periodic time interval is reached.

Optionally, generating the network slice state response information based on the state information of the network slice in the multiple NSACFs includes:
aggregating the state information of the network slice in the multiple NSACFs to generate the slice state response information.

Optionally, the first network slice state subscription request further includes an immediate reporting identifier. The immediate reporting identifier is used to instruct the first NSACF to immediately send the network slice state response information upon receiving the first network slice state subscription request.

Optionally, the method further includes:
determining the multiple NSACFs corresponding to the network slice through a network configuration or an operator policy.

Optionally, the first NSACF is a primary NSACF or a proxy NSACF in the multiple NSACFs corresponding to the network slice.

Optionally, the second network slice state subscription request includes at least one of a subscription event, subscription event filtering information, and subscription event reporting mode information.

Optionally, receiving the slice state subscription request sent by the AF or ASP includes:
when the AF or ASP is an untrusted AF or ASP, receiving the slice state subscription request sent by the AF or ASP.

Optionally, the method further includes:
selecting to obtain the first NSACF.

Optionally, selecting to obtain the first NSACF includes:
selecting to obtain the first NSACF through an NRF; or
selecting to obtain the first NSACF through a local configuration.

As shown in FIG. 9, FIG. 9 is a flowchart of a method for reporting slice state information of multiple NSACFs according to an embodiment of the disclosure. As shown in FIG. 9, the method is performed by an AF or AN ASP. The method includes, but is not limited to, the following steps.

Step 901, a first network slice state subscription request is sent to a first NSACF, the first network slice state subscription request includes a network slice.

In embodiments of the disclosure of the application, the AF or ASP subscribes to or cancels, according to service demands, a reporting notification of network slice state information to a specific NSACF (i.e. the first NSACF) in the requested network slice. This is implemented by sending the first network slice state subscription request to the first NSACF. The request network slice includes multiple NSACFs. After receiving the first network slice state subscription request, the first NSACF parses, based on the first network slice state subscription request, the multiple NSACFs in the network slice that may report slice state information reporting, subscribes to the slice state information of the network slice from the multiple NSACFs corresponding to the network slice through an NEF, and generates network slice state response information based on the slice state information of the network slice.

Step 902, network slice state response information sent by the first NSACF is received.

In embodiments of the disclosure, the first NSACF feeds back the network slice state response information to the AF or ASP. The AF or ASP can obtain a state of the network slice based on the response information of the network slice state.

By implementing embodiments of the disclosure, the first slice event subscription request sent by AF or ASP can be transmitted through the NEF, or the network slice state response information sent by the first NASCF can be transmitted through the NEF. In this way, it is possible to avoid uploading errors of the network slice state information, which is beneficial for improving the user experience.

Optionally, the first slice state subscription request includes at least one of a subscription event, subscription event filtering information, and subscription event reporting mode information.

Optionally, the subscription event includes at least one of the following:
a number of terminals registered on the requested network slice;
a number of PDU sessions established on the requested network slice;
a ratio of the number of terminals registered on the requested network slice to a maximum allowable number of registered terminals;
a ratio of the number of PDU sessions established on the requested network slice to a maximum allowable number of established PDU sessions;
the number of terminals registered on the requested network slice and the ratio of the number of terminals on registered the requested network slice to the maximum allowable number of registered terminals; or
the number of PDU sessions established on the requested network slice and the ratio of the number of PDU sessions established on the requested network slice to the maximum allowable number of established PDU sessions.

Optionally, the subscription event filtering information includes at least one of the following:
S-NSSAI of the requested network slice;
a registration area (RA) of the requested network slice;
a combination of the S-NSSAI of the requested network slice and a data network name (DNN); or
an area of interest (IoA) of the requested network slice.

Optionally, the subscription event reporting mode information includes at least one of the following:
a threshold for triggering reporting; or
a periodic time interval for triggering the reporting.

Optionally, the first network slice state subscription request further includes an immediate reporting identifier. The immediate reporting identifier is used to instruct the first NSACF to immediately send the network slice state response information upon receiving the network slice state subscription request.

Optionally, the multiple NSACFs corresponding to the network slice are determined through a network configuration in the NEF or an operator policy.

Optionally, the first NSACF is a primary NSACF or a proxy NSACF in the multiple NSACFs corresponding to the network slice.

Optionally, the first NSACF is selected by the NEF through an NRF, or the first NSACF is selected by the NEF through a local configuration.

In the above embodiments provided in the disclosure, the methods provided in embodiments of the disclosure are introduced from perspectives of the network device and the terminal. In order to achieve the various functions of the method provided in the above embodiments of the disclosure, the network device and the terminal may include hardware structures and software modules, and may implement the above various functions in the form of hardware structures, software modules, or the hardware structures in combination with the software modules. A certain function of the above functions can be executed in the form of a hardware structure, a software module, or a hardware structure in combination with a software module.

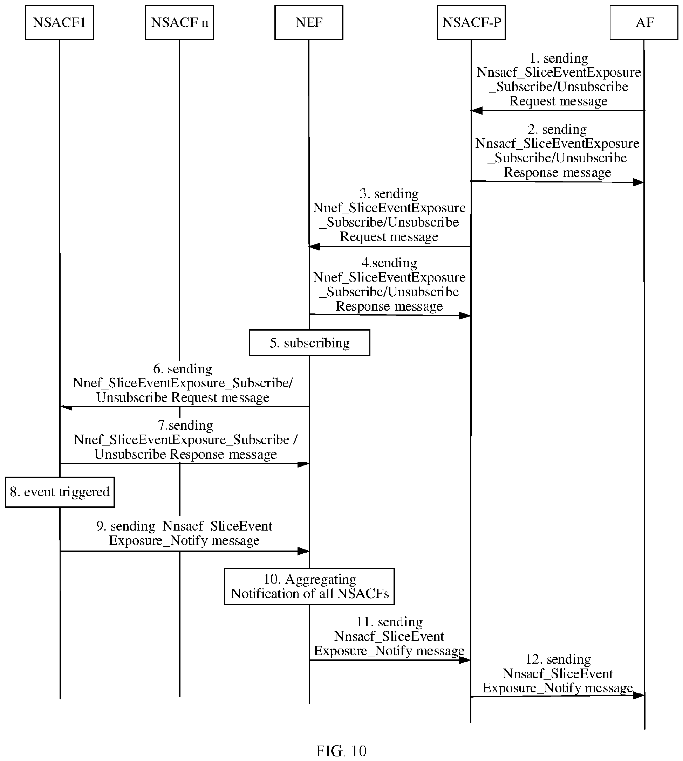

As shown in FIG. 10, FIG. 10 is a schematic diagram of a system for reporting slice state information of multiple NSACFs according to an embodiment of the disclosure. In order to subscribe to or cancel a reporting notification of a number of UEs or a number of PDU sessions of a network slice from a NSACF-P, an AF/ASP sends an Nnsacf-EventExposure subscribe/unsubscribe Request message to the NSACF-P, which includes an event ID, an event filter, and event reporting information.

The event ID parameter defines an ID of a subscribed event, which refers to at least one of: a number of registered terminals, a number of established PDU sessions, a ratio of registered terminals to a maximum allowable number of registered terminals, a ratio of established PDU sessions to a maximum allowable number of established PDU sessions, the number of registered terminals and the ratio of the number of registered terminals to the maximum allowable number of registered terminals, or the number of established PDU sessions and the ratio of the number of established PDU sessions to the maximum allowable number of established PDU sessions.

The event filter parameter defines a scope to be reported, such as a slice identifier (S-NSSAI), a registration area (RA), a combination of the slice identifier (S-NSSAI) and a data network name (DNN), an area of interest (IoA), etc.

The event reporting information parameter defines a reporting mode, including a threshold or a periodic reporting containing a periodic time interval. If the reporting information parameter is a threshold for triggering reporting, the current threshold may be reported when the threshold is reached. If the reporting information parameter is the periodic time interval for triggering the reporting, a current value may be reported when the periodic time interval is reached. The subscription request may also include an immediate reporting identifier, instructing to immediately report the current value requested upon receiving the request.

The NSACF-P (i.e., the first NSACF) is one of the multiple NSACFs in the requested slice. The NSACF-P may selected by an operator configuration or may be randomly discovered and selected by an AF/ASP request. The NSACF-P may be a primary NSACF in the requested slice or a proxy NSACF in the requested slice. When the NSACF-P is the primary NSACF, other NSACFs in the slice are secondary NSACFs. When the NSACF-P is the proxy NASCF, the NSACF and other NSACFs in the slice do not have a master-slave relationship.

The NSACF-P sends an Nnsacf_ EventExpose_Subscribe/usubsubscribe Response message to the AF/ASP. After receiving a slice event subscription request from the AF/ASP, the NSACF (Proxy/Primary) subscribes to a reporting event of the requested slice from each NSACF if the requested slice. After receiving reported information from each NSACF, it reports to the requesting AF/ASP.

There are multiple NSACF deployed within a PLMN of the requested slice, and NSACFs performs subscription requests and notifications through an NEF, and collect subscription event information. The NSACF-P sends an Nnef-EventExposure subscribe/unsubscribe Request message to the NEF. The NEF sends a subscribe/unsubscribe request message.

The NEF sends an Nnef_ EventExposure_subscribe/usubsubscribe Response message to the NSACF-P.

The NEF performs a discovery selection of the NSACF (s) corresponding to the requested slice. The NEF performs the discovery selection of the NSACF through an NRF or a local configuration.

If the NEF has not subscribed to an reporting event (such as reporting of a number of network slice UEs or a number of PDU sessions) related to a requested S-NSSAI from the NSACF (s) of the slice, the NEF initiates a subscription request to all NSACFs that support the requested S-NSSAI, and sends an Nnef-SliceEventExpose_Subscribe/Unsubscribe request message. The message includes an event ID, an event filter, event reporting information, and carries various relevant message parameters. The NEF stores the event reporting information requested by the NSACF-P. The NEF configures the event ID and the event filter information based on the content of the request message received from the NSACF-P.

The NEF can configure the event reporting information as periodic reporting or immediate reporting in the subscription request to the NSACFs. If slice admission control of the UE and/or session is performed on the requested S-NSSAI by more than two NSACFs, the relevant network state information of the requested slice can be obtained consistently and stably when the NEF configures the event reporting information as the periodic reporting. If the slice admission control of the UE and/or session is performed on the requested S-NSSAI by two NSACFs, slice network state information can be collected in real time, then the event reporting information configured by the NEF is generally the same as a request received from the NSACF-P. When two NSACFs are deployed, the event reporting information can also be configured as the periodic reporting to facilitate elastic expansion of the network and maintain consistency of network execution policies.

The NSACF sends an Nnsacf-SliceEventExposure_Subscribe/usubsubscribe response message to the NEF to confirm the subscription request.

When a reporting condition of the subscription is met, a report event is triggered, and the NSACF sends a triggering notification to the NEF to perform the reporting of subscription event related information.

The NSACF sends an Nnsacf-SliceEvent Exposure-Notify message to the NEF, which contains parameters such as an event ID, an event filter, and event reporting information.

Optionally, when the requested NSSAI selects multiple NSACFs to perform the slice admission control of UE and/or session, the NEF collects reports of all NFACFs and performs aggregation of all usage of the slice S-NSSAI within a requested event filter (such as a PLMN). When the reporting condition is met and the report is triggered, the NEF reports the usage of the slice S-NSSAI within the requested event filter (such as within the overall PLMN) to the NSACF-P. When the requested NSSAI selects two or a single NSACF to perform slice admission control of UE and/or session, the NEF can immediately return a report notification to the NSACF-P, to report a statistical usage report, or can perform periodic reporting to the NSACF-P based on a periodic subscription. Optionally, depending on an operator policy or a deployment demand, the usage for the NEF to perform aggregation can include the statistics of the NSACF-P itself or exclude the statistics of the NSACF-P itself.

When a condition of the event reporting subscribed by the AF/ASP is triggered/met, the subscription reporting is triggered. The NEF sends a notification to the NSACF-P, to report the usage and information related to the subscription according to a subscription requirement. For example, the usage and information may include a number of UE/Sessions within the PLMN, a number of UE/Sessions corresponding to a combination of the S-NSSAI and a DNN, a number of UE/Sessions within a RA, or a number of UE/Sessions within an IoA.

Optionally, if the NEF does not perform the aggregation of usage requested to report, the NSACF may perform the aggregation of all usage of the slice S-NSSAI within the requested event filter (such as the PLMN). Alternatively, if the NEF does not aggregate the usage of NSACF-P's own statistics, the NSACF-P may merge its own statistics with the usage of other NSACF(s).

The NSACF-P sends a notification to the AF/ASP, to report usage and information related to subscription according to a subscription requirement. For example, the usage and information may include the number of UE/Sessions in the PLMN, the number of UE/Sessions corresponding to the combination of the S-NSSAI and a DNN, the number of UE/Sessions in the RA, or the number of UE/Sessions in the IoA, or simultaneously reporting a ratio of the corresponding number of UE/Sessions to a maximum allowable quantity.

The system described in FIG. 10 is applied to a case where a trusted AF/ASP requests to subscribe to the counting and reporting of slice state information such as the number of slice UEs and sessions. An enhancement of this solution is also applicable to untrusted AF/ASP scenarios. In the untrusted scenarios, the AF can request subscription or cancellation of subscription NEF to NSACF-P through the.

When the AF/ASP is an untrusted AF/ASP, a difference in the steps performed by the system is as follows:
When AF/ASF is an untrusted AF/ASP, a subscription message can be sent to the NSACF-P through the NEF. The Nnsacf-EventExposure subscribe/unsubscribe Request message is replaced with two messages: an Nnsacf-EventExposure subscribe/unsubscribe Request message between the AF/ASP and the NEF and an Nnsacf-EventExposure subscribe/unsubscribe Request message between the NEF and the NSACF-P. Optionally, the NEF performs discovery and selection of the NSACF-P. The NEF performs the discovery and selection of the NSACF-P through an NRF or a local configuration. Optionally, when the operator policy does not expose slice identifiers to the untrusted AF/ASP, the NEF requests a mapping between identifiers of applications or services of the AF/ASP and slice identifiers. When the NEF receives a subscription request from the AF/ASP, it maps an application or service identifier to a slice identifier, and sends it to the NSACF.

When the AF/ASF is an untrusted AF/ASP, the subscription reporting message of the NSACF-P can be sent to the AF/ASP through the NEF. The Nnsacf-SliceEvent Exposure-Notify message is replaced with an Nnsacf-SliceEvent Exposure-Notify message between the NSACF-P and the NEF and an Nnef-SliceEvent Exposure-Notify message between the NEF and the AF/ASP. Optionally, when the operator policy does not expose slice identifiers to the untrusted AF/ASP, the NEF requests the mapping between identifiers of applications or services of the AF/ASP and slice identifiers. When the NEF receives a subscription event notification from the NSACF, it maps a slice identifier to an application or service identifier, and sends it to the AF/ASP.

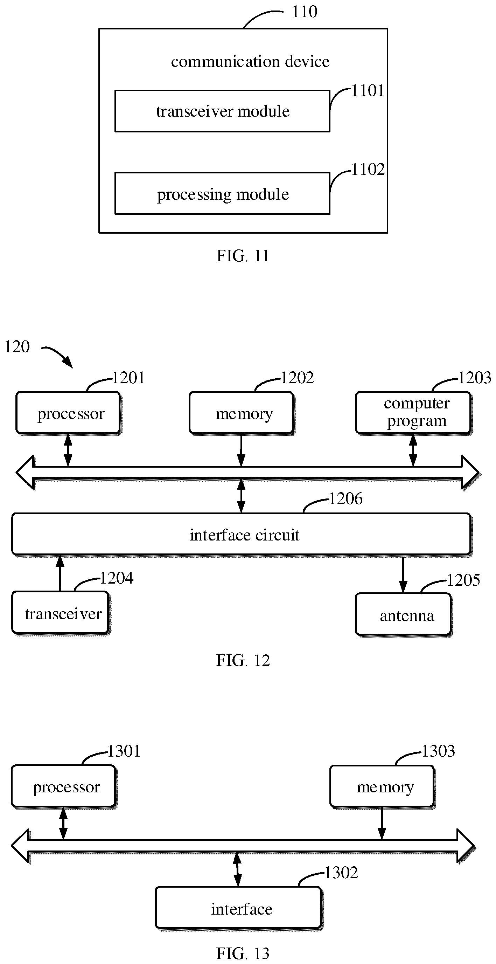

As illustrated in FIG. 11, FIG. 11 is a block diagram of a communication device 110 provided by an embodiment of the disclosure. The communication device 110 in FIG. 11 includes a transceiver module 1101 and a processing module 1102. The transceiver module 1101 may include a sending module and/or a receiving module. The sending module is configured to implement a sending function, the receiving module is configured to implement a receiving function, and the transceiver module 1101 is configured to implement a sending and/or receiving function.

The communication device 110 may be a terminal (such the terminal in the above method embodiments), a device within the terminal, or a device that can be matched and used with the terminal. Or, the communication device 110 may be a network device, a device within the network device, or a device that can be matched and used with the network device.

The communication device 110 is a first NSACF, including: a subscribing module, configured to subscribe to slice state information of a network slice from multiple NSACFs corresponding to the network slice through an NEF;
an obtaining module, configured to obtain, through the NEF, the slice state information of the network slice reported by the multiple NSACFs.

The communication device 110 is a NEF, including: a first receiving module, configured to receive a first network slice state subscription request sent by a first NSACF, in which the first network slice state subscription request includes a network slice;
a first sending module, configured to subscribe to slice state information of the network slice from multiple NSACFs corresponding to the network slice;
a second receiving module, configured to obtain the slice state information of the network slice reported by the multiple NSACFs; and
a second sending module, configured to send the slice state information to the first NSACF.

The communication device 110 is an AF or ASP, including: a third sending module, configured to send a first network slice state subscription request to a first NSACF, in which the first network slice state subscription request includes a network slice; and
a third receiving module, configured to receive network slice state response information sent by the first NSACF.

As illustrated in FIG. 12, FIG. 12 is a block diagram of a communication device 120 provided by another embodiment of the disclosure. The communication device 120 may be a network device or a terminal (such the terminal in the above method embodiments), or may be a chip, a chip system or a processor that supports the network device to realize the above-described methods, or may be a chip, a chip system or a processor that supports the terminal to realize the above-described methods. The device may be used to realize the methods described in the above method embodiments, which may make reference to the description of the above-described method embodiments in detail.

The communication device 120 may include one or more processors 1201. The processor 1201 may be a general-purpose processor or a dedicated processor, such as, a baseband processor and a central processor. The baseband processor is used for processing communication protocols and communication data. The central processor is used for controlling the communication device (e.g., a base station, a baseband chip, a terminal, a terminal chip, a distributed unit (DU), or a central unit (CU)), executing computer programs, and processing data of the computer programs.

Optionally, the communication device 120 may include one or more memories 1202 on which a computer program 1203 may be stored. The processor 1201 executes the computer program 1203 to cause the communication device 120 to perform the methods described in the above method embodiments. Optionally, the memory 1202 may also store data. The communication device 120 and the memory 1202 may be provided separately or may be integrated together.

Optionally, the communication device 120 may also include a transceiver 1204 and an antenna 1205. The transceiver 1204 may be referred to as a transceiver unit, a transceiver machine, or a transceiver circuit, for realizing a transceiver function. The transceiver 1204 may include a receiver and a transmitter. The receiver may be referred to as a receiving machine or a receiving circuit, etc., for realizing the receiving function. The transmitter may be referred to as a transmitter machine or a transmitting circuit, etc., for realizing the transmitting function.

Optionally, the communication device 120 may also include one or more interface circuits 1206. The interface circuits 1206 are used to receive code instructions and transmit them to the processor 1201. The processor 1201 runs the code instructions to cause the communication device 120 to perform the method described in the method embodiments.

In an implementation, the processor 1201 may include a transceiver for implementing the receiving and sending functions. The transceiver may be, for example, a transceiver circuit, an interface, or an interface circuit. The transceiver circuit, the interface, or the interface circuit for implementing the receiving and sending functions may be separated or may be integrated together. The transceiver circuit, the interface, or the interface circuit described above may be used for reading and writing code/data, or may be used for signal transmission or delivery.

In an implementation, the processor 1201 may store a computer program 1203. When the computer program 1203 runs on the processor 1201, the communication device 120 may be caused to perform the methods described in the method embodiments above. The computer program 1203 may be solidified in the processor 1201, and in such case the processor 1201 may be implemented by hardware.

In an implementation, the communication device 120 may include circuits. The circuits may implement the sending, receiving or communicating function in the preceding method embodiments. The processor and the transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the description of the above embodiments may be a network device or a terminal (such the terminal in the above method embodiments), but the scope of the communication device described in the disclosure is not limited thereto, and the structure of the communication device may not be limited by FIG. 12. The communication device may be a stand-alone device or may be part of a larger device. For example, the described communication device may be:
(1) a stand-alone IC, a chip, a chip system or a subsystem;
(2) a collection of ICs including one or more ICs, optionally, the collection of ICs may also include storage components for storing data and computer programs;
(3) an ASIC, such as a modem;
(4) a module that can be embedded within other devices;
(5) a receiver, a terminal, a smart terminal, a cellular phone, a wireless device, a handheld machine, a mobile unit, an in-vehicle device, a network device, a cloud device, an artificial intelligence device, and the like; and
(6) others.

A case where the communication device may be a chip or a chip system is described with reference to the schematic structure of the chip shown in FIG. 9. The chip shown in FIG. 13 includes a processor 1301 and an interface 1302. There may be one or more processors 1301, and there may be multiple interfaces 1302.

In the case where the chip is used to implement the function of the terminal (such the terminal in the above method embodiments) in the embodiments of the disclosure:
optionally, the chip further includes a memory 1303, which is used to store necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The embodiments of the disclosure also provide a system for reporting slice state information of multiple NSACFs. The system includes the communication device as a terminal (such the terminal in the above method embodiments) and the communication device as a network device in the aforementioned embodiment of FIG. 11. Or, the system includes the communication device as a terminal (such the terminal in the above method embodiments) and the communication device as a network device in the aforementioned embodiment of FIG. 12.

The disclosure also provides a storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer program on the computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs)) or a wireless manner (e.g., using infrared wave, wireless wave, or microwave). The computer-readable storage medium may be any usable medium to which the computer is capable to access or a data storage device such as a server integrated by one or more usable mediums and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art understands that the first, second, and other various numerical numbers involved in the disclosure are only described for the convenience of differentiation, and are not used to limit the scope of the embodiments of the disclosure, and not to indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D", are used to distinguish different technical features of the type, the technical features described using the "first", "second", and "third", and "A", "B", "C" and "D", do not indicate any order of precedence or magnitude.

The correspondences shown in the tables in the disclosure can be configured or predefined. The values of information in each table are only examples and can be configured to other values, which are not limited by this disclosure. When configuring the correspondence between information and various parameters, it is not necessary to configure all the correspondence shown in each table. For example, in the tables in the disclosure, some correspondence relationships shown in certain rows may not be configured. For example, appropriate deformation adjustments can be made based on the above table, such as splitting, merging, etc. The names of the parameters shown in the titles of the above tables can also use other names that can be understood by the communication device, and the values or representations of the parameters can be other values or representations that can be understood by the communication device. When implementing the above tables, other data structures can be used, such as arrays, queues, containers, stacks, linear tables, pointers, linked lists, trees, graphs, structures, classes, heaps, hash lists, or hash tables.

The term "predefine" in this disclosure may be understood as define, pre-define, store, pre-store, pre-negotiate, pre-configure, solidify, or pre-fire.

Those skilled in the art may realize that the units and steps of the various examples described in combination with the embodiments disclosed herein are capable of being implemented in the form of electronic hardware, or a combination of computer software and electronic hardware. Whether these functions are performed in hardware or software depends on the particular application and design constraints of the technical solution. Those skilled in the art may use different methods to implement the described functions for each particular application, but such implementations should not be considered as beyond the scope of the disclosure.

It is clearly understood by those skilled in the art that, for the convenience and brevity of description, the specific working processes of the systems, apparatuses, and units described above can be referred to the corresponding processes in the preceding method embodiments, and may not be repeated herein.

The above implementations are only specific implementations of the disclosure, but the scope of protection of the disclosure is not limited thereto. Those skilled in the art familiar to this technical field can easily think of changes or substitutions in the technical scope disclosed by the disclosure, which shall be covered by the scope of protection of the disclosure. Therefore, the scope of protection of the disclosure shall be governed by the scope of protection of the stated claims.

## Claims

1. A method for reporting slice state information of multiple network slice admission control functions (NSACFs), performed by a first NSACF, comprising:
subscribing to slice state information of a network slice from multiple NSACFs corresponding to the network slice through a network exposure function (NEF); and
obtaining, through the NEF, the slice state information of the network slice reported by the multiple NSACFs.

2. The method of claim 1, further comprising:
receiving a first network slice state subscription request sent by an application function (AF) or an application service provider (ASP), wherein the first network slice state subscription request comprises the network slice.

3. The method of claim 1 or 2, wherein subscribing to the slice state information of the network slice from the multiple NSACFs corresponding to the network slice through the NEF comprises:
sending a second network slice state subscription request to the NEF, wherein the NEF sends the second network slice state subscription request to the multiple NSACFs corresponding to the network slice, wherein the first NSACF belongs to the multiple NSACFs corresponding to the network slice.

4. The method of claim 1 or 2, wherein subscribing to the slice state information of the network slice from the multiple NSACFs corresponding to the network slice through the NEF comprises:
sending a second network slice state subscription request to the NEF, wherein the NEF sends the second network slice state subscription request to a second NSACF in the multiple NSACFs corresponding to the network slice, wherein the first NSACF belongs to the multiple NSACFs corresponding to the network slice.

5. The method of claim 2, further comprising:
generating network slice state response information based on the slice state information of the network slice in the multiple NSACFs; and
sending the network slice state response information to the AF or ASP.

6. The method of claim 2, wherein the first slice state subscription request comprises at least one of a subscription event, subscription event filtering information, and subscription event reporting mode information.

7. The method of claim 6, wherein the subscription event comprises at least one of:
a number of terminals registered on the requested network slice;
a number of packet data unit (PDU) sessions established on the requested network slice;
a ratio of the number of terminals registered on the requested network slice to a maximum allowable number of registered terminals;
a ratio of the number of PDU sessions established on the requested network slice to a maximum allowable number of established PDU sessions;
the number of terminals registered on the requested network slice, and the ratio of the number of terminals registered on the requested network slice to the maximum allowable number of registered terminals; or
the number of PDU sessions established on the requested network slice, and the ratio of the number of PDU sessions established on the requested network slice to the maximum allowable number of established PDU sessions.

8. The method of claim 6, wherein the subscription event filtering information comprises at least one of:
single network slice selection assistance information (S-NSSAI) of the requested network slice;
a registration area (RA) of the requested network slice;
a combination of the S-NSSAI of the requested network slice and a data network name (DNN); or
an area of interest (IoA) of the requested network slice.

9. The method of claim 6, wherein the subscription event reporting mode information comprises at least one of:
a threshold for triggering reporting; or
a periodic time interval for triggering the reporting.

10. The method of claim 6, wherein the first network slice state subscription request comprises an immediate reporting identifier, wherein the immediate reporting identifier is configured to instruct the first NSACF to immediately send the network slice state response information upon receiving the first network slice state subscription request.

11. The method of claim 5, wherein generating the network slice state response information based on the slice state information of the network slice in the multiple NSACFs comprising:
aggregating the state information of the network slice in the multiple NSACFs to generate the slice state response information.

12. The method of any one of claims 1-11, further comprising:
determining the multiple NSACFs corresponding to the network slice through a network configuration in the NEF or an operator policy.

13. The method of any one of claims 1-11, wherein the first NSACF is a primary NSACF or a proxy NSACF in the multiple NSACFs corresponding to the network slice.

14. The method of claim 3 or 4, wherein the second network slice state subscription request comprises at least one of a subscription event, subscription event filtering information, and subscription event reporting mode information.

15. The method of claim 6, further comprising:
filtering the network slice state response information based on the subscription event filtering information.

16. The method of claim 6, further comprising:
determining whether a reporting condition is met based on the subscription event reporting mode information; and
when the reporting condition is met, reporting the network slice state response information.

17. The method of claim 5, wherein receiving the first slice state subscription request sent by the AF or ASP comprises:
when the AF or ASP is an untrusted AF or ASP, receiving the first slice state subscription request sent by the AF or ASP through the NEF.

18. The method of claim 17, wherein the first NSACF is selected by the NEF.

19. The method of claim 18, wherein the first NSACF is selected by the NEF through a network repository function (NRF), or the first NSACF is selected by the NEF through a local configuration.

20. A method for reporting slice state information of multiple network slice admission control functions (NSACFs), performed by a network exposure function (NEF), comprising:
receiving a first network slice state subscription request sent by a first NSACF, wherein the first network slice state subscription request comprises a network slice;
subscribing to slice state information of the network slice from multiple NSACFs corresponding to the network slice;
obtaining the slice state information of the network slice reported by the multiple NSACFs; and
sending the slice state information to the first NSACF.

21. The method of claim 20, wherein subscribing to the slice state information of the network slice from the multiple NSACFs corresponding to the network slice comprises:
receiving a second network slice state subscription request sent by the first NSACF; and
sending the second network slice state subscription request to the multiple NSACFs corresponding to the network slice, wherein the first NSACF belongs to the multiple NSACFs corresponding to the network slice.

22. The method of claim 20, wherein subscribing to the slice state information of the network slice from the multiple NSACFs corresponding to the network slice comprises:
receiving a second network slice state subscription request sent by the first NSACF; and
sending the second network slice state subscription request to a second NSACF in the multiple NSACFs corresponding to the network slice, wherein the first NSACF belongs to the multiple NSACFs corresponding to the network slice.

23. The method of claim 20, further comprising:
generating network slice state response information based on the slice state information of the network slice in the multiple NSACFs; and
sending the network slice state response information to an application function (AF) or an application service provider (ASP).

24. The method of claim 20, wherein the first slice state subscription request comprises at least one of a subscription event, subscription event filtering information, and subscription event reporting mode information.

25. The method of claim 24, wherein the subscription event comprises at least one of:
a number of terminals registered on the requested network slice;
a number of packet data unit (PDU) sessions established on the requested network slice;
a ratio of the number of terminals registered on the requested network slice to a maximum allowable number of registered terminals;
a ratio of the number of PDU sessions established on the requested network slice to a maximum allowable number of established PDU sessions;
the number of terminals registered on the requested network slice, and the ratio of the number of terminals registered on the requested network slice to the maximum allowable number of registered terminals; or
the number of PDU sessions established on the requested network slice, and the ratio of the number of PDU sessions established on the requested network slice to the maximum allowable number of established PDU sessions.

26. The method of claim 24, wherein the subscription event filtering information comprises at least one of:
single network slice selection assistance information (S-NSSAI) of the requested network slice;
a registration area (RA) of the requested network slice;
a combination of the S-NSSAI of the requested network slice and a data network name (DNN); or
an area of interest (IoA) of the requested network slice.

27. The method of claim 24, wherein the subscription event reporting mode information comprises at least one of:
a threshold for triggering reporting; or
a periodic time interval for triggering the reporting.

28. The method of claim 23, wherein generating the network slice state response information based on the slice state information of the network slice in the multiple NSACFs comprising:
aggregating the slice state information of the network slice in the multiple NSACFs to generate the slice state response information.

29. The method of claim 24, wherein the first network slice state subscription request comprises an immediate reporting identifier, wherein the immediate reporting identifier is configured to instruct the first NSACF to immediately send the network slice state response information upon receiving the first network slice state subscription request.

30. The method of any one of claims 20-29, further comprising:
determining the multiple NSACFs corresponding to the network slice through a network configuration or an operator policy.

31. The method of any one of claims 20-29, wherein the first NSACF is a primary NSACF or a proxy NSACF in the multiple NSACFs corresponding to the network slice.

32. The method of claim 21 or 22, wherein the second network slice state subscription request comprises at least one of a subscription event, subscription event filtering information, and subscription event reporting mode information.

33. The method of claim 23, wherein receiving a slice state subscription request sent by the AF or ASP comprises:
when the AF or ASP is an untrusted AF or ASP, receiving the slice state subscription request sent by the AF or ASP.

34. The method of claim 33, further comprising:
selecting the first NSACF.

35. The method of claim 34, wherein selecting the first NSACF comprises:
selecting the first NSACF through a network repository function (NRF); or
selecting the first NSACF through a local configuration.

36. A method for reporting slice state information of multiple network slice admission control functions (NSACFs), performed by an application function (AF) or an application service provider (ASP), comprising:
sending a first network slice state subscription request to a first NSACF, wherein the first network slice state subscription request comprises a network slice; and
receiving network slice state response information sent by the first NSACF.

37. The method of claim 36, wherein the first slice state subscription request comprises at least one of a subscription event, subscription event filtering information, and subscription event reporting mode information.

38. The method of claim 37, wherein the subscription event comprises at least one of:
a number of terminals registered on the requested network slice;
a number of packet data unit (PDU) sessions established on the requested network slice;
a ratio of the number of terminals registered on the requested network slice to a maximum allowable number of registered terminals;
a ratio of the number of PDU sessions established on the requested network slice to a maximum allowable number of established PDU sessions;
the number of terminals registered on the requested network slice, and the ratio of the number of terminals registered on the requested network slice to the maximum allowable number of registered terminals; or
the number of PDU sessions established on the requested network slice, and the ratio of the number of PDU sessions established on the requested network slice to the maximum allowable number of established PDU sessions.

39. The method of claim 37, wherein the subscription event filtering information comprises at least one of:
single network slice selection assistance information (S-NSSAI) of the requested network slice;
a registration area (RA) of the requested network slice;
a combination of the S-NSSAI of the requested network slice and a data network name (DNN); or
an area of interest (IoA) of the requested network slice.

40. The method of claim 37, wherein the subscription event reporting mode information comprises at least one of:
a threshold for triggering reporting; or
a periodic time interval for triggering the reporting.

41. The method of claim 37, wherein the first network slice state subscription request comprises an immediate reporting identifier, wherein the immediate reporting identifier is configured to instruct the first NSACF to immediately send the network slice state response information upon receiving the first network slice state subscription request.

42. The method of any one of claims 36-41, wherein multiple NSACFs corresponding to the network slice is determined through a network configuration in a network exposure function (NEF) or an operator policy.

43. The method of any one of claims 36-41, wherein the first NSACF is a primary NSACF or a proxy NSACF in multiple NSACFs corresponding to the network slice.

44. The method of claim 30, wherein the first NSACF is selected by an NEF through a network repository function (NRF), or the first NSACF is selected by the NEF through a local configuration.

45. An apparatus for reporting slice state information of multiple network slice admission control functions (NSACFs), applied to a first NSACF, comprising:
a subscribing module, configured to subscribe to slice state information of a network slice from multiple NSACFs corresponding to the network slice through a network exposure function (NEF); and
an obtaining module, configured to obtain, through the NEF, the slice state information of the network slice reported by the multiple NSACFs.

46. An apparatus for reporting slice state information of multiple network slice admission control functions (NSACFs), applied to a network exposure function (NEF), comprising:
a first receiving module, configured to receive a first network slice state subscription request sent by a first NSACF, wherein the first network slice state subscription request comprises a network slice;
a first sending module, configured to subscribe to slice state information of the network slice from multiple NSACFs corresponding to the network slice;
a second receiving module, configured to obtain the slice state information of the network slice reported by the multiple NSACFs; and
a second sending module, configured to send the slice state information to the first NSACF.

47. An apparatus for reporting slice state information of multiple network slice admission control functions (NSACFs), applied to an application function (AF) or an application service provider (ASP), comprising:
a third sending module, configured to send a first network slice state subscription request to a first NSACF, wherein the first network slice state subscription request comprises a network slice; and
a third receiving module, configured to receive network slice state response information sent by the first NSACF.

48. A communication device, comprising:
a transceiver;
a memory; and
a processor, connected to the transceiver and the memory respectively, configured to control wireless signal transmission and reception of the transceiver by executing computer-executable instructions on the memory, and capable of performing the method of any one of claims 1-19 or the method of any one of claims20-35 or the method of any one of claims 36-44.

49. A computer-readable storage medium having computer-executable instructions stored thereon that, when executed by a processor, the method of any one of claims 1-19 or the method of any one of claims 20-35 or the method of any one of claims 36-44 is implemented.
